(19) Europäisches Patentamt

European Patent Office

Office européen des brevets

(11) **EP 0 972 825 B1**

(12) **EUROPEAN PATENT SPECIFICATION**

(45) Date of publication and mention
of the grant of the patent:
**02.05.2002 Bulletin 2002/18**

(51) Int Cl.⁷: **C11D 17/00**, C11D 3/37,
A61K 9/20, C02F 5/08

(21) Application number: **99304428.8**

(22) Date of filing: **08.06.1999**

(54) **Pellet formulations**

Teilchenförmige Zusammensetzungen

Compositions en forme boulette

(84) Designated Contracting States:
**DE FR GB IT NL**

(30) Priority: **17.06.1998 FR 9807643**

(43) Date of publication of application:
**19.01.2000 Bulletin 2000/03**

(73) Proprietor: **ROHM AND HAAS COMPANY**
**Philadelphia, Pennsylvania 19106-2399 (US)**

(72) Inventors:
• **Duccini, Yves**
**6000 Beauvais (FR)**
• **Gauthier, Francois**
**60550 Verneuil en Halatte (FR)**
• **Tatin, Johan**
**60200 Compiegne (FR)**

(74) Representative: **Davis, Carole Amanda et al**
**Rohm and Haas (UK) Limited**
**European Operations Patent Dept.,**
**Lennig House,**
**2 Mason's Avenue**
**Croydon, Surrey CR9 3NB (GB)**

(56) References cited:
EP-A- 0 313 328          WO-A-98/45400
GB-A- 1 376 212          US-A- 4 673 527

• LOWENTHAL W: "Disintegration of Tablets"
JOURNAL OF PHARMACEUTICAL SCIENCES,
vol. 61, no. 11, 1 November 1972 (1972-11-01),
pages 1695-1711, XP002126338

## Description

The present invention relates to improved chemical compositions in pellet form which disintegrate quickly and efficiently in aqueous media. By "pellet", we mean any solid formulation, including, but not limited to, tablets, bricks, bars, granules, balls, or blocks, also agglomerated materials such as those which form as a result of material sticking together during storage, especially under high humidity conditions.

It is well known to use chemical compositions in pellet form, for example, in the field of medicine and agriculture and more recently other areas such as in detergent applications. Pellets offer certain advantages over granular compositions; they are non-dusting, do not require measuring, take less space because they are compressed and the ingredients do not segregate during transit and storage. However, problems are experienced regarding the dissolution or disintegration of the pellets in use. In the manufacturing process, a balance must be kept between a pellet pressure which is, on the one hand, high enough to ensure that the pellets are well formed and resistant to handling, and a pellet pressure which is, on the other hand, low enough to achieve an appropriate solubility/dispersibility profile. To combat this problem, it is known to be helpful to use a processing additive either to improve pellet cohesion without the use of high pelleting pressure or to improve tablet dispersibility.

Looking specifically at additives which improve dispersability, Journal of Pharmaceutical Sciences Vol. 61, No., 11, 1972, pp 1695-1711 reviews the various classes of known disintegrants; for example, materials which, i) cause disintegration by evolving gas, such as sodium bicarbonate in the presence of citric or tartaric acid; ii) those which promote water absorption, such as starch, colloidal silicon dioxide, carboxymethyl cellulose and rice starch; iii) those which swell, for example, cross-linked polyacrylic acids, cross-linked gum arabic, carboxymethyl cellulose; iv) those which increase porosity such as potato and corn starch and finally v) those which undergo physicochemical bonding, such as micro crystalline cellulose and kaolin.

There are also many prior art documents directed to detergent tablets which contain disintegration agents. Examples of these include: EP-A-0 799 886 which discloses the use of starch derivatives, cellulose compounds, polyvinyl pyrrolidone compounds, polyvinyl polypyrrolidone compounds, bentonite compounds, alginates, gelatine and pectines as disintegrants and EP-A-0 522 766 which lists corn, maize, rice and potato starches, and starch derivatives, cellulose and cellulose derivatives and various synthetic organic polymers such as polyethylene glycol, cross-linked polyvinyl pyrrolidine and inorganic materials which swell such as bentonite clay, as disintegrants.

EP-A-0 481 547 teaches multilayer machine dishwashing detergent tablets which contain an outer layer, a barrier layer and an inner layer. The tablets release the detergent ingredients sequentially, first from the outer layer and then from the inner layer and the time delay between the two dissolutions is controlled by the thickness and choice of ingredients in the barrier layer separating the outer and inner layers. One of the ingredients in this barrier layer is a disintegrant which preferably includes one of a maleic acid/acrylic acid copolymer or a salt thereof, ethylene maleic anhydride cross-linked polymer and polyethylene glycol.

EP-A-0 238 341 identifies sequestering agents, for instance, nitrilo triacetic acid or diethylene diamine tetra acetic acid or a low molecular weight anionic polymer formed from ethylenically unsaturated monomers e.g. unsaturated carboxylic acid, sulphonic acid or phosphonic acid monomers, as disintegrants. Further, this document mentions, when discussing the teaching of background art documents EP-A-0 075 818 and EP-A-0 037 026. that the conventional insoluble water swellable disintegration aids disclosed therein, such as high molecular carbohydrates like starch, pulverised cellulose such as ground wood, or polyvinyl pyrrolidone and so on, either do not lead to satisfactory disintegration or the disintegration is very slow at low temperatures.

US-A-4 673 527 describes improved tablet products for water treatment comprising a water soluble polymeric material entrapping the water treatment agent.

The dissolution or disintegration of tablets for use in detergent compositions for automatic dishwashing is usually controlled to ensure dissolution which is regular but not too quick so as to avoid too much of the detergent composition being consumed in the pre-wash. However, during the main dishwash cycle it is advantageous for the remainder of the tablet to dissolve quickly so that residual tablet solids are not a problem on the dishware. By contrast, a key requirement in detergent compositions for laundry applications is to deliver as much of the detergent composition as possible so that it is available in the initial step of the wash. This will also be the case if the dishwashing machine has no pre-wash cycle. Since calcium and magnesium hardness ions in the wash water are already present at the beginning of the wash cycle, there is a high risk that sequestering ingredients are at too low a concentration and these will precipitate together with these hardness ions. This will result in insoluble scale being formed on the garments being laundered and a reduced amount of active material in the detergent composition being available for cleaning. With certain builders in detergent compositions, for example, sodium tripolyphosphate (STPP), this problem is critical since Ca/STPP precipitates can form scale which is very difficult to remove. The size of the tablets and the application conditions will also affect the tablet dispersability profile; for example, tablets for use in laundry applications are typically considerably larger than those used in automatic dishwashing machines or in water treatment; 40g up to 55g tablets for laundry versus 20-25g tablets for dishwashing and water treatment. This fact, coupled with the tendency for the laundry tablet to be buried in the garments being washed means that the solubility requirements are particularly difficult to meet for tablets used in laundry applications as compared to other applications.

The aim of the present invention, therefore, is to provide pellet formulations which disintegrate or dissolve very quickly on contact with water which makes them suitable for use in applications which require the active ingredients to be delivered quickly. The pellets must also have sufficient strength so that they do not crumble or break whilst being stored, transported or handled; have good storage under various climatic conditions involving fluctuating temperatures and humidities. It is particularly desirable that the pellets are sensitive to water but not to moisture. They must also have good activity, which requires a high content of active ingredients, and be able to exert this good activity at different temperatures and over a wide spectrum of application conditions, for example over a range of degrees of water hardness in the case of detergents.

Accordingly the present invention provides a chemical composition in pellet form comprising:-

a) at least one constituent with pharmaceutical, agrochemical, water treatment, water softening, fabric softening or detergency activity; and
b) at least one disintegration agent comprising one or more cross-linked polyacrylate water absorbent polymers with a gel-formation time of 30 seconds or less. Preferably, the cross-linked polyacrylate water absorbent polymers have a gel-formation time of 10 seconds or less.

The present invention is also directed to a method of improving the speed of disintegration of chemical compositions in pellet form by incorporating therein:-

a) at least one constituent with pharmaceutical, agrochemical, water treatment, water softening , fabric softening or detergency activity; and
b) at least one disintegration agent comprising one or more cross linked polyacrylate water absorbent polymers with a gel formation time of 30 seconds or less.

By "improving the speed of disintegration", it is meant that the time of disintegration is less for pellets according to the present invention as compared with pellets which do not contain one or more cross linked polyacrylate water absorbent polymers with a gel formation time of 30 seconds or less.

Our finding that the use of cross-linked polyacrylate water absorbent polymers with a gel-formation time of 30 seconds or less in pellets achieves excellent disintegration is highly surprising in view of the teaching in the Journal of Pharmaceutical Sciences Vol. 61, No., 11, 1972, pp 1695-1711 which explains even though a material swells on gel formation this in itself does not mean that it will necessarily make a good disintegration agent.

Preferably, the cheminal composition of the invention contains at least 1% by weight of the pellet of the at least one desintegration agent.

The cross-linked polyacrylate water absorbent polymers used in the present invention are typically those resulting from the radical polymerisation and cross-linking of, at least one water soluble ethylenically unsaturated monomer selected from:-

(meth)acrylic acid, alkali metal or ammonium salts of (meth)acrylic acid,
(meth)acrylic acid esters, maleic acid, maleic anhydride and (meth)acrylamide.

The cross-linking reaction may be carried out using at least one of the following three methods:

i) cross-linking by radical polymerisation with a co-monomer comprising at least two double bonds. Examples of such co-monomers include: trimethylol propane di(tri) (meth) acrylate, N,N-methylene bis (methyl)acrylamide, glyoxal bis acrylamide, ethylene glycol di (meth)acrylate;

ii) cross-linking by radical copolymerisation with a so-called functional monomer comprising one double bond (active in copolymerisation) and, at least one functional group capable of leading to cross-linking reactions between a functional group and a chemically active moiety of the main water soluble monomer(s). Examples of this type of cross-linker include: N-methylol(meth)acrylamide, and glycidyl(meth)acrylate; and

iii) Cross-linking by adding a non-polymerisable functional cross-linker containing at least two functional groups capable of reacting with the chemically active moieties of the water soluble monomer(s). Examples of this type of cross-linker include: glyoxal, ethylene glycol, (poly)ethylene glycol diglycidyl ether, (poly)propylene glycol diglycidyl ether, (di)glycerol polyglycidyl ether, polyglycerol polyglycidyl ether, epichlorohydrin, ethylene di-amine and zinc acetate.

The amount of cross-linker necessary for the production of the water-absorbing polymers is typically in the range of 0.001 and 10 weight percent, most preferably in the range of 0.01 and 5 weight percent, based upon the total weight of water-soluble ethylenic unsaturated monomer(s).

The cross-linked polyacrylate water absorbent polymers used in the present invention may be produced by any suitable radical polymerisation method. The solution-type polymerisation processes (also called gel processes) most commonly employed are those disclosed in EP-A-0 530 438, and a typical reversed-phase suspension polymerisation process is such as that described in EP-A-0 258 120. The essential feature of the cross-linked polyacrylate water absorbent polymers used in the present invention is that they have a gel-formation time of less than 30 seconds.

In addition to the composition comprising at least one constituent with pharmaceutical, agrochemical, water treatment, water softening, fabric softening or detergency activity, the composition may also comprise other ingredients including, for example, one or more of the following: processing additives, adjuvants, coatings materials, enzymes, builders, scale inhibitors, emulsifiers, surfactants, soaps, dispersants, zeolites, de-greasing agents, anti-foaming agents, phosphates, phosphonates, bleach, optical brighteners, fillers, extenders, soil removers, deflocculating agents, anti-coagulants, anti-drift agents, diluents, and carriers.

The present invention will now be described with reference to the following Examples.

The test procedures used are intended to simulate a real application. Detergent tablets using typical laundry detergent compositions were made using conventional tablet making equipment. The tablets were loaded with various different disintegration agents. The disintegration efficiency of the tablets containing the disintegration agents was then tested and compared against similar tablets either without disintegration agents (controls) or with other known disintegration agents (comparatives). The laundry detergent compositions used are detailed in Table 1 below:

## TABLE 1

| Ingredients | Detergent Composition | | | | |
|---|---|---|---|---|---|
| | 1 | 2 | 3 | 4 | 5 |
| Anionic Surfactant | 5-15% | 5-15% | - | 5-15% | 5-15% |
| Non-ionic Surfactant | 5-15% | <5% | 5-15% | 5-15% | 5-15% |
| Cationic Surfactant | | <5% | - | - | - |
| Soap | <5% | - | - | <5% | <5% |
| TPP | - | - | >30% | 15-30% | 15-30% |
| Zeolite | >30% | 15-30% | - | <5% | - |
| polymer builder | <5% | <5% | - | <5% | <5% |
| Phosphonate | <5% | <5% | <5% | <5% | <5% |
| Bleach | 5-15% | 15-30% | 5-15% | 5-15% | 5-15% |

The disintegrating agents tested are detailed in Table 2 below:

TABLE 2

| Disintegration Agent | Molecular weight | Source |
|---|---|---|
| A | - | Elf Atochem S.A. |
| B | - | Elf Atochem S.A. |
| C | - | NSKK |
| D | - | Elf Atochem S.A. |
| E | 1600 | Polyscience |
| F | 1200-1600 | Elf Atochem S.A. |
| G | 2400/3200 | Elf Atochem S.A. |
| H | 1600-2200 | Elf Atochem S.A. |
| I | 3800-5100 | Elf Atochem S.A. |
| J | - | - |

Disintegration agents A, B, C and D are cross-linked polyacrylate water absorbent polymers;
E is a polystyrene/maleic anhydride 60/40 copolymer;
F is SMA 1000 (styrene/maleic acid 50/50);
G is SSMA 1000 (styrene/maleic acid 50/50 sulphonated);
H is SMA 3000 (styrene/maleic acid 75/25);
I is SSMA 3000 (styrene/maleic acid 75/25 sulphonated); and
J is micro-crystalline cellulose.

We have found that the order of disintegration performance for the cross-linked polyacrylate water absorbent polymers A-D is a function of gel-formation time. The gel formation time of polymers A-D was measured using the following method, often referred to in the art as the vortex test or vortex swelling rate test.

An aqueous solution of sodium chloride is prepared by dissolving analytical grade sodium chloride in demineralized water up to a 0.9% weight concentration of salt in the final solution. This 0.9% wt. sodium chloride aqueous solution is a reference test liquid ("test liquid") commonly used in the characterisation of water absorbing polymers. In a temperature controlled room (20 °C), cross-linked polyacrylate water absorbing polymer (3g) are introduced into a beaker (200ml) of internal diameter (55mm). The beaker is placed over an electromagnetic stirrer and a magnetic bar (45mm X 8mm) is introduced into it for stirring. The stirring speed is fixed at 600 +/-20 rpm and the beaker is rapidly charged with the test liquid (100g). As soon as addition of the test liquid is complete, this is counted as time zero and the point from which time is measured. Time measurements are stopped when the stirring vortex has disappeared due to the formation of a gel by the water-absorbing polymer. For extremely fast gelling polymers, it may be necessary to invert the order of addition of the polymer and test liquid to the beaker.

Table 3 below details the gel-formation time for disintegration agents A-D.

TABLE 3

| Disintegration Agent | Gel-Formation Time (sec.) |
|---|---|
| A | 5 |
| B | 180 |
| C | 44 |
| D | 95 |

As evidenced from the Examples below, we have observed that the order of disintegration activity for agents A-D correlates with the order of the gel-formation time for these agents.

The efficiency of the disintegration agents was determined using the following test method.

Tablets containing the detergent compositions given in Table 1 together with either no disintegration agent or a disintegration agent detailed in Table 2 were prepared using conventional tablet making apparatus. The rate of disintegration for each tablet is measured as follows. A pre-weighed tablet is placed on a support in a 5 litre beaker, and cold tap water (4.5 litres) at a temperature of 16-17 °C is added. The solution is then agitated at 400 rpm for 15 minutes using a magnetic bar and magnetic bar stirring apparatus. At the end of the test cycle, the residue was placed in a cup, oven dried at 80°C for 2 hours and re-weighed. The percentage residue is calculated as follows:

$$\frac{\text{Weight of residue X 100}}{\text{Weight of tablet at the start}}$$

The results of the tests are presented in Tables 4-7 below:-

TABLE 4

| Detergent Formulation - 1. Weight of tablets = 26.5g | | | | |
|---|---|---|---|---|
| **Disintegration Agent** | **% of Disint. Agent in Tablet** | **Tableting Conditions** | | **% Residue** |
| | | **Pressure** | **Volume ($cm^3$)** | |
| None (control) | 0 | 15.5 | 18 | 51 |
| A | 1.5 | 15.5 | 18 | 13 |
| B (comparative) | 1.5 | 15.5 | 18 | 47 |
| C (comparative) | 1.5 | 15.5 | 18 | 34 |
| E (comparative) | 1.5 | 15.5 | 18 | 50 |
| F (comparative) | 1.5 | 15.5 | 18 | 52 |
| G (comparative) | 1.5 | 15.5 | 18 | 50 |
| H (comparative) | 1.5 | 15.5 | 18 | 45 |
| I (comparative) | 1.5 | 15.5 | 18 | 51 |
| J (comparative) | 1.5 | 15.5 | 18 | 20 |

TABLE 5

| Detergent Formulation - 2 | | | | | |
|---|---|---|---|---|---|
| **Disintegration Agent** | **% of Disint. Agent in Tablet** | **Tableting conditions** | | **Tablet Weight (g)** | **% Residue** |
| | | **Pressure** | **Volume ($cm^3$)** | | |
| None (control) | 0 | 16.5 | 17.5 | 25.4 | 92 |
| None (control) | 0 | 16.5 | 18.0 | 25.9 | 91 |
| None (control) | 0 | 16.0 | 19.0 | 26.0 | 91 |
| None (control) | 0 | 16.0 | 19.0 | 25.8 | 91 |
| A* | 1.5 | 16.0 | 19.0 | 26.5 | 77 |
| A* | 1.5 | 15.0 | 19.0 | 26.3 | 66 |
| B (comparative) | 1.5 | 15.0 | 19.0 | 26.4 | 83 |
| D (comparative) | 1.5 | 15.0 | 19.0 | 26.5 | 85 |
| J (comparative) | 1.5 | 15.0 | 19.0 | 26.0 | 86 |

A* has exactly the same chemical composition as the cross-linked poly acrylic acid polymer A, the only difference is that A* was milled to a finer particle size than agent A. Notwithstanding this difference, no significant effects on the activity of A* as compared to A were observed.

These results appear to show that disintegration agent A* performs only slightly better than micro crystalline cellulose in terms of the % residue remaining at the end of the test. However, it is important to note that the tablets formed with the micro crystalline cellulose are noticeably more friable than the tablets formed with disintegrating agent A* and consequently do not meet the storage and handling demands required of the tablets of the present invention.

TABLE 6

| Detergent Formulation - 3 | | | | | |
|---|---|---|---|---|---|
| Disintegration Agent | % of Disint. Agent in Tablet | Tableting | conditions | Tablet Weight (g) | % Residue |
| | | Pressure | Volume (cm$^3$) | | |
| None (control) | 0 | 16.5 | 18.0 | 22.9 | 77 |
| None (control) | 0 | 17.0 | 18.0 | 25.5 | 76 |
| A* | 0.5 | 16.5 | 18.0 | 23.5 | 63 |
| A* | 0.8 | 16.5 | 18.0 | 23.4 | 45 |
| A* | 1.0 | 16.5 | 18.0 | 23.1 | 24 |
| A* | 1.5 | 16.5 | 18.0 | 23.2 | 0 (after 4 mins) |
| A* | 1.5 | 17.0 | 18.0 | 23.4 | 0 (after 4 mins) |
| B (comparative) | 1.5 | 16.5 | 18.0 | 23.4 | 80 |
| C (comparative) | 1.5 | 16.5 | 18.0 | 23.6 | 75 |
| D (comparative) | 1.5 | 16.5 | 18.0 | 23.6 | 80 |

TABLE 7

| Detergent Formulation - 4 | | | | | |
|---|---|---|---|---|---|
| Disintegration Agent | % of Disint. Agent in Tablet | Tableting conditions | | Tablet Weight (g) | % Residue |
| | | Pressure | Volume (cm$^3$) | | |
| None (control) | 0 | 17.0 | 18.0 | 21.2 | 85 |
| None (control) | 0 | 18.0 | 18.5 | 21.2 | 85 |
| None (control) | 0 | 18.0 | 18.75 | 21.5 | 86 |
| A* | 1.5 | 18.0 | 18.75 | 20.5 | 0 after two minutes |
| B (comparative) | 1.5 | 18.0 | 18.75 | 20.3 | 80 |
| C (comparative) | 1.5 | 18.0 | 18.75 | 20.4 | 65 |
| D (comparative) | 1.5 | 18.0 | 18.75 | 20.2 | 78 |

TABLE 8

| Detergent Formulation - 5 | | |
|---|---|---|
| Disintegration Agent | % of Disint. Agent in Tablets | % Residue after 30 minutes |
| None (control) | 0 | 57 |
| A | 0.8 | 3.5 |
| A | 1.5 | 0 |
| B | 0.8 | 56 |
| B | 1.5 | 18 |
| E | 1.5 | 35 |

TABLE 9

| Detergent Formulation - 3 | | |
|---|---|---|
| **Disintegration Agent** | **% of Disint. Agent in Tablets** | **% Residue after 10 minutes** |
| None (control) | 0 | 62 |
| A | 1.5 | 15 |
| E | 1.5 | 56 |
| F | 1.5 | 28 |

Although the degree of disintegration varies to some extent depending upon the detergent formulation used, it is very clear that disintegration agent A out-performs either i) tablets containing the comparative disintegration agents, or ii) the other cross-linked polyacrylate water absorbent polymers either in terms of the disintegration activity or the friability of the tablets, or both.

**Claims**

1.    Chemical composition in pellet form comprising:-

a) at least one constituent with pharmaceutical, agrochemical, water treatment, water softening, fabric softening or detergency activity; and
b) at least one disintegration agent comprising one or more cross-linked polyacrylate water absorbent polymers with a gel-formation time of 30 seconds 30 seconds or less

**characterized in that** said at least one disintegrant in incorporated in the pellet.

2.    Chemical composition according to Claim 1 containing at least 1% by weight of the pellet of the at least one disintegration agent.

3.    Chemical composition according to Claim 1 or 2 wherein the gel-formation time of said cross-linked polyacrylate water absorbent polymers is 10 seconds or less.

4.    Chemical composition according to Claim 1, 2 or 3 wherein the disintegration agent results from the radical polymerisation and cross-linking of at least one water soluble ethylenically unsaturated monomer selected from:- (meth)acrylic acid, alkali metal or ammonium salts of (meth)acrylic acid, (meth)acrylic acid esters, maleic acid, maleic anhydride and (meth)acrylamide.

5.    Chemical composition according to any of Claims 1-4 wherein the pellet form is a solid formulation selected from tablets, bricks, bars, granules, balls, or blocks, and agglomerated materials.

6.    Method of improving the speed of disintegration of chemical compositions in pellet form by incorporating therein:-

a) at least one constituent with pharmaceutical, agrochemical, water treatment, water softening , fabric softening or detergency activity; and
b) at least one disintegration agent comprising one or more cross-linked polyacrylate water absorbent polymers with a gel-formation time of 30 seconds or less.

7.    Chemical composition according to Claim 6 containing at least 1% by weight of the pellet of the at least one disintegration agent.

8.    Method according to Claim 6 or 7 wherein the gel-formation time of said cross-linked polyacrylate water absorbent polymers is 10 seconds or less.

9.    Method according to Claim 6, 7 or 8 wherein the disintegration agent results from the radical polymerisation and cross-linking of at least one water soluble ethylenically unsaturated monomer selected from:- (meth)acrylic acid, alkali metal or ammonium salts of (meth)acrylic acid, (meth)acrylic acid esters, maleic acid, maleic anhydride and (meth)acrylamide.

**10.** Method according to any of Claims 6, 7, 8 or 9 wherein the pellet is a solid formulation selected from tablets, bricks, bars, granules, balls, or blocks, and agglomerated materials.


**Patentansprüche**

**1.** Chemische Zusammensetzung in Pelletform umfassend:

a) mindestens einen Bestandteil mit pharmazeutischer, agrochemischer, Wasserbehandlungs-, Wasserenthädungs-, Stoff-Weichspül- oder ReinigungsWirkung, sowie
b) mindestens ein Zerfallsmittel umfassend ein oder mehrere vernetzte wasserabsorbierende Polyacrylatpolymere mit einer Gel-Bildungszeit von bis zu 30 Sekunden,

**dadurch gekennzeichnet, dass** das wenigstens eine Zerfallsmittel in dem Pellet eingebaut ist.

**2.** Chemische Zusammensetzung nach Anspruch 1, welche mindestens 1 Gew.-% des Pellets von dem mindestens einen Zerfallsmittel enthält.

**3.** Chemische Zusammensetzung nach Anspruch 1 oder 2, wobei die Gel-Bildungszeit der vernetzten wasserabsorbierenden Polyacrylatpolymere bis zu 10 Sekunden beträgt.

**4.** Chemische Zusammensetzung nach Anspruch 1, 2 oder 3, wobei sich das Zerfallsmittel aus der Radikalpolymerisation und Vernetzung von mindestens einem wasserlöslichen ethylenisch ungesättigten Monomer ergibt, welches ausgewählt ist aus: (Meth)acrylsäure, Alkalimetall- oder Ammoniumsalzen von (Meth)acrylsäure, (Meth)acrylsäureester, Maleinsäure, Maleinsäureanhydrid sowie (Meth)acrylamid.

**5.** Chemische Zusammensetzung nach einem der Ansprüche 1 bis 4, wobei die Pelletform eine feste Formulierung ist, die aus Tabletten, Ziegeln (bricks), Stäben, Granalien, Kugeln oder Blöcken, sowie agglomerierten Materialien ausgewählt ist.

**6.** Verfahren zur Verbesserung der Zerfallsgeschwindigkeit von chemischen Zusammensetzungen in Pelletform, durch Inkorporieren von:

a) mindestens einem Bestandteil mit pharmazeutischer, agrochemischer, Wasserbehandlungs-, Wasserenthärtung-, Stoff-Weichspül- oder ReinigungsWirkung; und
b) mindestens einem Zerfallsmittel umfassend ein oder mehrere vernetzte wasserabsorbierende Polyacrylatpolymere mit einer Gel-Bildungszeit von bis zu 30 Sekunden.

**7.** Chemische Zusammensetzung nach Anspruch 6, welche mindestens 1 Gew.-% des Pellets von dem mindestens einen Zerfallsmittel enthält.

**8.** Verfahren nach Anspruch 6 oder 7, wobei die Gel-Bildungszeit der vernetzten wasserabsorbierenden Polyacrylatpolymere bis zu 10 Sekunden beträgt.

**9.** Verfahren nach Anspruch 6, 7 oder 8, wobei das Zerfallsmittel aus der Radikalpolymerisation und Vernetzung von mindestens einem wasserlöslichen ethylenisch ungesättigten Monomer stammt, das ausgewählt ist aus: (Meth)acrylsäure, Alkalimetall- oder Ammoniumsalze von (Meth)acrylsäure, (Meth)acrylsäureester, Maleinsäure, Maleinsäureanhydrid und (Meth)acrylamid.

**10.** Verfahren nach einem der Ansprüche 6, 7, 8 oder 9, wobei das Pellet eine feste Formulierung ist, die aus Tabletten, Ziegeln, Stangen, Granalien, Kugeln oder Blöcken sowie agglomerierten Materialien ausgewählt ist.

**Revendications**

1. Composition chimique sous une forme de boulettes ou pastilles comprenant :

   a) au moins un constituant possédant une activité pharmaceutique, agrochimique, de traitement de l'eau, d'adoucissement de l'eau, d'adoucissement des tissus ou de détergence ; et
   b) au moins un agent de désintégration comprenant un ou plusieurs polymères absorbant l'eau de polyacrylate réticulé possédant une durée de gélification de 30 secondes ou moins,

   **caractérisée en ce qu'**au moins un agent désintégrant est incorporé dans la pastille.

2. Composition chimique selon la revendication 1, contenant au moins 1 % en poids de la pastille d'au moins un agent de désintégration.

3. Composition chimique selon la revendication 1 ou 2, dans laquelle la durée de gélification des dits polymères absorbant l'eau de polyacrylate réticulé est de 10 secondes ou moins.

4. Composition chimique selon la revendication 1, 2 ou 3, dans laquelle l'agent de désintégration découle de la polymérisation radicalaire et de la réticulation d'au moins un monomère éthyléniquement insaturé hydrosoluble sélectionné parmi : l'acide méth(acrylique), des sels de métal alcalin ou d'ammonium d'acide (méth)acrylique, des esters d'acide (méth)acrylique, l'acide maléique, l'anhydride maléique et le (méth)acrylamide.

5. Composition chimique selon l'une des revendications 1 à 4, dans laquelle la forme en pastilles est une formulation solide sélectionnée parmi des comprimés, des briques, des pains, des granulés, des billes ou des blocs, et des matériaux agglomérés.

6. Méthode d'amélioration de la vitesse de désintégration de compositions chimiques sous la forme de pastilles, en y incorporant :

   a) au moins un constituant possédant une activité pharmaceutique, agrochimique, de traitement de l'eau, d'adoucissement de l'eau, d'adoucissement des tissus ou de détergence ; et
   b) au moins un agent de désintégration comprenant un ou plusieurs polymères absorbant l'eau de polyacrylate réticulé possédant une durée de gélification de 30 secondes ou moins.

7. Composition chimique selon la revendication 6, contenant au moins 1 % en poids de la pastille d'au moins un agent de désintégration.

8. Méthode selon la revendication 6 ou 7, dans laquelle la durée de gélification des dits polymères absorbant l'eau de polyacrylate réticulé est de 10 secondes ou moins.

9. Méthode selon la revendication 6, 7 ou 8, dans laquelle l'agent de désintégration découle de la polymérisation radicalaire et de la réticulation d'au moins un monomère éthyléniquement insaturé hydrosoluble sélectionné parmi : l'acide méth(acrylique), des sels de métal alcalin ou d'ammonium d'acide (méth)acrylique, des esters d'acide (méth)acrylique, l'acide maléique, l'anhydride maléique et le (méth)acrylamide.

10. Méthode selon l'une des revendications 6, 7, 8 ou 9, dans laquelle la pastille est une formulation solide sélectionnée parmi des comprimés, des briques, des pains, des granulés, des billes ou des blocs, et des matériaux agglomérés.